# EUROPEAN PATENT SPECIFICATION

(11) **EP 2 983 333 B1**
(45) Date of publication and mention of the grant of the patent: **22.02.2017**
(21) Application number: 14290231.1
(22) Date of filing: 06.08.2014
(51) Int. Cl.: H04L 12/741

(54) **A system and method for providing routes to physical residential gateways**
System und Verfahren zur Bereitstellung von Routen auf physikalischen Residential-Gateways
Système et procédé permettant de procurer des trajets à des passerelles résidentielles physiques

(43) Date of publication of application: 10.02.2016
(73) Proprietor: ALCATEL LUCENT, 92100 Boulogne-Billancourt (FR)
(72) Inventor: Rajamanickam, Thirumurthy, 600032 Chennai (IN); Ooghe, Sven, 2018 Antwerpen (BE)
(74) Representative: ALU Antw Patent Attorneys

(56) References cited:
- US-A1- 2013 266 007
- US-A1- 2014 146 664

## Description

### Technical Field

The present invention relates to the field of network routing in residential gateways in the context of network function virtualisation in broadband deployment.

A residential gateway, further referred to as the physical residential gateway, is a device that connects one or more access networks to a home network. In other words, it allows connecting a local area network or LAN to a wide area network or WAN. The wide area network can be a larger computer network or the Internet. Wide area network connectivity may be provided through for example DSL, cable modem, a broadband mobile phone network, or any other suitable connections. Multiple devices can be described as a physical residential gateway, such as a cable modem, a DSL modem, a wireless router, a network switch, a wireless access point, or any combination of the above.

Routing is the process of selecting best paths in a network. Routing is performed for many kinds of networks, including the telephone network (circuit switching), electronic data networks (such as the Internet), and transportation networks. In packet switching networks, routing directs packet forwarding (the transit of logically addressed network packets from their source toward their ultimate destination) through intermediate nodes. Intermediate nodes are typically network devices such as routers, bridges, gateways, firewalls, Broadband Network Gateway or switches. The routing process usually directs forwarding on the basis of routing tables which maintain a record of the routes to various network destinations. Thus, constructing routing tables, which are held in the router's memory, is important for efficient routing.

### Background

The ETSI GS Network Functions Virtualisation (NFV) 001 V1.1.1 Use Cases, published on October 14th 2013, describes a use case where virtual residential gateways have been implemented as virtual residential gateways as Network Functions Virtualisation, also referred to as NFV. The use case also states that in some architectures, the virtual residential gateways can be controlled by a centralized controller following the SDN architecture principles and standards, such as OpenFlow or OpenConfig. Pre-NFV service provider networks include a Provider Edge router at the edge of the core, facing the physical residential gateway. This use case describes business models where the Provider Edge functions and/or the physical residential gateways are virtualized. Provider Edge routers are typically shared by a high number of customers, whereas physical residential gateways are used exclusively by a single customer. Virtualization of the physical residential gateways therefore results in an economy of space compared to the virtualization of the Provider Edge routers. The control and the data planes are in this case both moved to the cloud for each instance of physical residential gateway. This means that the routes received by the various routing protocol instances in each virtual residential gateway will be identical. All the data plane is forwarded to the virtual residential gateways, and each virtual residential gateway runs the routing protocol as for example a separate RIPv2 instance. This replication of the routing protocol drastically increases the total footprint of the implementation of the virtual residential gateways. It also increases the processing power required to run the routing protocol in each virtual residential gateway or physical residential gateway, and therefore increases the costs associated with the deployment of virtual residential gateways. US2013/0266007A1 discloses a system comprising a network comprising a plurality of physical switches and devices connected to the physical switches, and a SDN controller. The SDN controller disclosed in US2013/0266007A1 is connected to the plurality of physical switches and is adapted to determine SDN routes through the network between the devices and the plurality of physical switches. The SDN controller disclosed in US2013/0266007A1 is further adapted to send the SDN routes to each switch, thereby configuring a routing table per physical switch, each physical switch storing a routing table. US2013/0266007A1 describes a system and a method wherein the control plane of the determination of routes within a network runs in the physical switches of the network. This maximizes the footprint induced by the routing protocol, and maximizes the processing power required by the physical switches.

### Summary of the Invention

It is an objective to disclose a system and the related method that overcome the above identified shortcomings of existing tools. More particularly, it is an objective to disclose such a system and method for providing routes to virtual residential gateways and to physical residential gateways, with reduced footprint induced by the routing protocol, and with reduced required processing power, i.e. with reduced risk for excessive costs. It is a further objective to disclose such a system that provides routes to the virtual and the physical residential gateways in a fast and efficient manner.

According to embodiments of the present invention, the above defined objectives are realized by a system for providing select routes to a plurality of physical residential gateways, the system comprising:
- the plurality of physical residential gateways, each physical residential gateway adapted to receive packets and further adapted to receive the select routes;
- a physical access network comprising:
   - a plurality of access nodes, each access node configured to forward routing information to an upstream router;
   - the upstream router adapted to collect the routing information from the plurality of access nodes, and to forward the routing information to a software defined networking controller;
- the software defined networking controller or SDN controller adapted to run:
   - a SDN controller platform application adapted to receive a request from a physical residential gateway;
   - the residential gateway router application adapted to receive the routing information, to calculate the select routes from the routing information and to forward the select routes to a plurality of virtual residential gateway applications; and
   - the plurality of virtual residential gateway applications, each virtual residential gateway application adapted to store the select routes in a virtual residential gateway routing table, and further adapted to provide the select routes to a respective physical residential gateway upon the request of the respective physical residential gateway.

To each physical residential gateway of the physical access network corresponds a virtual residential gateway in the software defined networking controller. This way, the control plane runs in the virtual residential gateways of the software defined networking controller, while all the data plane is retained in the physical residential gateway of the physical access network. The upstream router of the physical access network gathers routing information from the access nodes of the physical access network. This way, the upstream router is aware of the possible routes in the physical access network. The residential gateway router application fetches this routing information from the upstream router and therefore becomes aware of the possible routes in the physical access network. The residential gateway router application is periodically provided with routing information about the physical access network. The routing protocol is performed by a centralized instance in the software defined networking controller as the select routes are determined by the residential gateway router application for the plurality of virtual residential gateways. The residential gateway router application uses the routing information to calculate select routes for the plurality of virtual residential gateways. The residential gateway router application then pushes the select routes to each virtual residential gateway routing table of each of the virtual residential gateways. This way, the select routes are available in the virtual residential gateway routing table of each of the virtual residential gateways. In other words, a single instance of the residential gateway router application of the software defined networking controller calculates select routes for all the virtual residential gateways. This drastically reduces the footprint induced by the routing protocol in the software defined networking controller, and also reduces the processing power required to run the routing protocol compared to the processing power required to run the routing protocol in various instances of physical or virtual residential gateways. The costs associated with the routing protocol are therefore lowered. The system for providing select routes to the virtual and the physical residential gateways is less complex, and the select routes are delivered in a fast and efficient manner.

If more than one route are received and/or processed by the residential gateway router application for the same subnet-prefix, the residential gateway router application also systematically selects the select route for which the routing cost is the lowest. In other words, the residential gateway router application calculates the select route associated with the lowest routing cost for the given configuration of the physical access network. This way, the routing costs associated with the select routes are also lowered.

The select routes are fetched from the virtual residential gateway routing table by the residential gateway router application and are configured as static select routes by the residential gateway router application. This way, the select routes are configured as static select routes in the upstream router of the physical access network, instead of relying on a residential gateway router application that dynamically advertises select routes.

According to an optional embodiment, the SDN controller platform application according to the present invention is further adapted to request the select routes from the virtual residential gateways upon a request of the respective physical residential gateway and to forward the select routes to the plurality of physical residential gateways.

This way, the virtual residential gateways of the software defined networking controller direct the physical residential gateway of the physical access network on how to handle the data plane traffic. The SDN controller platform application is a centralized platform through which the virtual residential gateways control the behaviour of the physical residential gateway. When a physical residential gateway of the physical access network receives a packet that the physical residential gateway does not know how to handle, the SDN controller platform requests select routes to the corresponding virtual residential gateway. The corresponding virtual residential gateway fetches select routes from its virtual residential gateway routing table and forwards them to the SDN controller platform application. The SDN controller platform application configures the select routes in the physical residential gateway through for example OpenFlow or OpenConfig.

According to an optional embodiment, each of the plurality of physical residential gateways according to the present invention is further adapted to store the select routes in a physical residential gateway routing table.

This way, when the physical residential gateway receives a packet with an identical destination address as the one for which the physical residential gateway was configured by the SDN controller platform application, the physical residential gateway can fetch a corresponding select route from its physical residential gateway routing table and forward the packet towards its destination address along this select route. This way, the routing protocol is performed in a fast and efficient manner.

According to an optional embodiment, one or more of the packets according to the present invention is a data packet, comprising a destination address for which there is no select route available in the physical residential gateway routing table and for which the respective physical residential gateway sends the request to the software defined networking controller requesting a select route for the destination address.

A physical residential gateway of the physical access network receives a data packet with a given destination address. The physical residential gateway fetches a select route from its physical residential gateway routing table, but no select route in its table is associated with the given destination address. The physical residential gateway sends a request to the software defined networking controller in order to be configured by the SDN controller platform application with a select route associated with the given destination address. This way, all the control plane is run by the virtual residential gateways in the software defined networking controller, while all the data plane is retained in the physical residential gateways.

According to an optional embodiment, one or more of the packets according to the present invention is a control packet for which the respective residential gateway sends the request to the software defined networking controller requesting a processing of the control packet.

The physical residential gateway of the physical access network does not have to intelligence to handle a control packet. The physical residential gateway therefore sends a request to the software defined networking controller in order to be configured by the SDN controller platform application to learn how to handle a control packet. This way, all the control plane is run by the virtual residential gateways in the software defined networking controller, while all the data plane is retained in the physical residential gateways.

According to an optional embodiment, the upstream router according to the present invention is adapted to collect the routing information from a plurality of routers from the physical access network.

This way, the upstream router of the physical access network learns routing information from a plurality of access nodes, and from other routers of the physical access network. This way, the upstream router is aware of the routing possibilities in the physical access network for the given configuration of the physical access network and can forward this routing information to the residential gateway router application of the software defined networking controller.

According embodiments of the invention, there is provided a computer implemented method to run on a software defined networking controller, the method comprising the steps of:
- receiving routing information from an upstream router, the upstream router adapted to collect the routing information from a plurality of routers and/or a plurality of access nodes of a physical access network;
- calculating select routes from the routing information;
- forwarding the select routes to a plurality of virtual residential gateways;
- storing the select routes in a virtual residential gateway routing table of each of the virtual residential gateways;
- receiving a request from a physical residential gateway of the physical access network;
- requesting the select routes from a respective virtual residential gateway;
- retrieving the select routes from a respective virtual residential gateway routing table; and
- forwarding the select routes to a SDN controller platform application in order to provide the select routes to the physical residential gateway.

To each physical residential gateway of the physical access network corresponds a virtual residential gateway in the software defined networking controller. This way, the control plane runs in the virtual residential gateways of the software defined networking controller, while all the data plane is retained in the physical residential gateway of the physical access network. Routing information over the physical access network is gathered and provided for the calculation of select routes. This way, select routes are calculated taking routing information over the physical access network into account. The select routes are calculated by a centralized instance for the plurality of virtual residential gateways and pushed to each virtual residential gateway routing table of each of the virtual residential gateways. This way, the select routes are available in the virtual residential gateway routing table of each of the virtual residential gateways. In other words, a single instance calculates select routes for all the virtual residential gateways. This drastically reduces the footprint induced by the routing protocol and also reduces the processing power required to run the routing protocol in various instances of physical or virtual residential gateways. The costs associated with the routing protocol are therefore lowered. The system for providing select routes to the virtual and the physical residential gateways is less complex, and the select routes are delivered in a fast and efficient manner.

If more than one route is received and/or processed for the same subnet-prefix, the route for which the routing cost is the lowest will be selected. In other words, the route associated with the lowest routing cost for the given configuration of the physical access network is chosen. This way, the costs associated with the select routes are also lowered.

According to an optional embodiment, the computer implemented method according to the present invention further comprises the steps of:
- configuring the select routes as static select routes; and
- forwarding the select routes to the upstream router in order to advertise the select routes to the physical access network.

The select routes are configured as static select routes instead of relying on a dynamically advertising of the select routes. This way, the upstream router of the physical access network is aware of the select routes.

The current invention in addition also relates to a computer program comprising software code adapted to perform the method according to the present invention.

The invention further relates to a computer readable storage medium comprising the computer program according to the present invention.

### Brief Description of the Drawings

Fig. 1 schematically illustrates an embodiment of a system for providing select routes to a plurality of physical residential gateways.
Fig. 2 schematically illustrates the embodiment of the system of Figure 1, where a physical residential gateway receives a data packet for which the physical residential gateway sends a routing request to the software defined networking controller.
Fig. 3 schematically illustrates the embodiment of the system of Figures 1 and 2, where a physical residential gateway receives a data packet for which the physical residential gateway has routing information.
Fig. 4 schematically illustrates the embodiment of the system of Figures 1 to 3, where a physical residential gateway receives a control packet for which the physical residential gateway sends a routing request to the software defined networking controller.
Fig. 5 schematically illustrates a suitable computing system for hosting the system of Figures 1 to 4.

### Detailed Description of Embodiment(s)

Software-defined networking, also referred to as SDN, is an approach to computer networking which allows network administrators to manage network services through abstraction of lower level functionality, and to have programmable central control of network traffic via a controller without requiring physical access to the network's switches. This is done by decoupling the system that makes the decisions about where traffic is sent, also called the control plane, from the underlying systems that forward traffic to the selected destination, also called the data plane.

OpenFlow is a communications protocol that gives access to the forwarding plane of a network switch or router over the network. OpenFlow enables remote controllers to determine the path of network packets through the network of switches. Also, OpenFlow allows switches from different suppliers - often each with their own proprietary interfaces and scripting languages - to be managed remotely using a single, open protocol. OpenFlow allows remote administration of a switch's packet forwarding tables, by adding, modifying and removing packet matching rules and actions. This way, routing decisions can be made periodically or ad hoc by the controller and translated into rules and actions with a configurable lifespan, which are then deployed to a switch's flow table.

The Routing Information Protocol, also referred to as RIP, is a distance-vector routing protocol, which employs the hop count as a routing metric. RIP prevents routing loops by implementing a limit on the number of hops allowed in a path from the source to a destination. RIP implements the split horizon, route poisoning and hold down mechanisms to prevent incorrect routing information from being propagated. Each RIP router transmits full updates periodically. Due to the deficiencies of the original RIP specification, RIP version 2, also referred to as RIPv2, was developed and standardized in 1998. In an effort to avoid unnecessary load on hosts that do not participate in routing, RIPv2 multicasts the entire routing table to all adjacent routers. Route tags were also added in RIP version 2. RIPv2 is understood as a help for the residential gateway to learn routes dynamically advertised by the operator and to perform an optimal routing, i.e. calculate the routes associated with the lowest routing costs.

Representational State Transfer, also referred to as REST, is an abstraction of the architecture of the World Wide Web. REST is an architectural style consisting of a coordinated set of architectural constraints applied to components, connectors, and data elements, within a distributed hypermedia system. REST ignores the details of component implementation and protocol syntax in order to focus on the roles of components, the constraints upon their interaction with other components, and their interpretation of significant data elements. REST was initially described in the context of HTTP, but it is not limited to that protocol. RESTful architectures, i.e. architectures that comply with the REST architectural constraints, may be based on other Application Layer protocols if they already provide a rich and uniform vocabulary for applications based on the transfer of meaningful representational state. RESTful applications maximize the use of the existing, well-defined interface and other built-in capabilities provided by the chosen network protocol, and minimize the addition of new application-specific features on top of it.

Simple Network Management Protocol, also referred to as SNMP, is an Internet-standard protocol for managing devices on IP networks. Devices that typically support SNMP include routers, switches, servers, workstations, printers, modem racks and more. SNMP is used mostly in network management systems to monitor network-attached devices for conditions that warrant administrative attention.

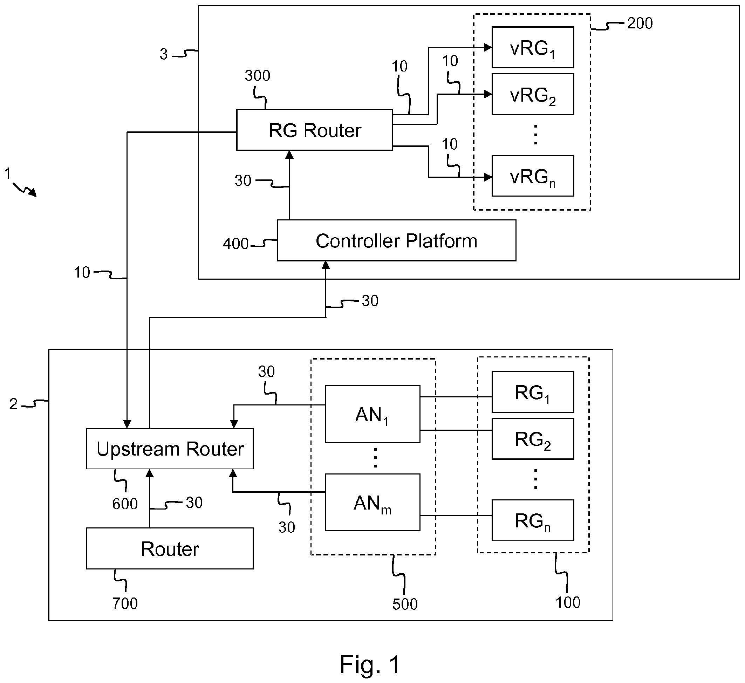

According to an embodiment shown in Fig. 1, a system 1 comprises a physical access network 2 and a software defined networking controller 3. The physical access network 2 comprises a plurality of physical residential gateways 100 labelled RG₁, RG₂, to RGₙ where n is an integer higher than 1, a plurality of access nodes 500 labelled AN₁, AN₂, to ANₘ where m is an integer higher than 1, an upstream router 600 and a router 700. As visible in Fig. 1, a single router 700 is depicted, but according to an alternative embodiment, the physical access network 2 comprises a plurality of networks 700. Several physical residential gateways 100 can be connected to the same access node 500 of the physical access network 2. For example, as visible in Fig. 1, RG₁ and RG₂ are connected to AN₁, while RGₙ is connected to RGₘ. According to an alternative embodiment, RG₁ is for example connected to AN₁ while RG₂ and RGₙ are for example connected to ANₘ. The software defined networking controller 3 comprises a SDN controller platform application 400, a residential gateway router application 300 and a plurality of virtual residential gateway applications 200 labelled vRG₁, vRG₂, to vRGₙ where n is an integer higher than 1. For each physical residential gateway 100, a corresponding Network Function Virtualisation instance, also referred to as virtual residential gateway 200, runs in the software defined networking controller 3. In other words, to each physical residential gateway 100 of the physical access network 2 corresponds a virtual residential gateway 200 in the software defined networking controller 3. Each of the access nodes 500 of the physical access network 2 is configured to collect routing information 30 of the physical residential gateways 100 to which it is connected and to forward the routing information 30 to the upstream router 600 of the physical access network 2. The upstream router 600 collects the routing information 30 from the plurality of access nodes 500. The upstream router 600 is also configured to collect routing information 30 from the router 700. According to an alternative embodiment, the upstream router 600 is configured to collect routing information 30 from a plurality of routers 700 of the physical access network 2. The residential gateway router application 300 of the software defined networking controller 3 establishes a RIPv2 routing session through a tunnel with the upstream router 600 of the physical access network 2. The tunnel established by the residential router application 300 to the upstream router 600 is for example established with the Generic Routing Encapsulation, also referred to as GRE. According to an alternative embodiment, the tunnel is established according to any other suitable tunneling protocol, such as Multi-Protocol Label Switch, also referred to as MPLS, or Layer-2 Tunneling Protocol, also referred to as L2TP, etc. The routing information 30 comprises parameters such as subnet-prefix, priority, routing costs, etc. The routing information 30 comprises static routes configured in the physical residential gateways 100. The routing information 30 is received through the standard routing protocol RIPv2, as Protocol Data Units. According to an alternative embodiment, the routing information 30 is received as Protocol Data Units through any other suitable standard routing protocol, such as Open Shortest Path First, also referred to as OSPF, or Intermediate System to Intermediate System, also referred to as IS-IS, etc. Through this RIPv2 session, the residential gateway router application 300 learns the routing information 30 advertised by the upstream router 600. This way, the residential gateway router application 300 learns about the routes of the physical access network 2. According to an alternative embodiment, each access node 500 comprises a built-in upstream router 600, and the residential gateway router application 300 then establishes a tunnel with each access node 500 of the physical access network 2 to learn the routing information 30 advertised by the access nodes 500. If more than one route is received and/or processed by the residential gateway router application 300 for the same subnet-prefix, the residential gateway router application 300 systematically selects the select route 10 for which the routing cost is the lowest. In other words, the residential gateway router application 300 calculates the select route 10 associated with the lowest routing cost for the given configuration of the physical access network 2. The residential gateway router application 300 therefore calculates select routes 10. Through Representational State Transfer, the residential gateway router application 300 forwards the select routes 10 to the plurality of virtual residential gateways 200. According to an alternative embodiment, the residential gateway router application 300 forwards the select routes 10 to the plurality of virtual residential gateways 200 through any other suitable mechanism, such as Remote Procedure Call, also referred to as RPC, etc. Each virtual residential gateway 200 stores the select routes 10 in a virtual residential gateway routing table 201. The residential gateway router application 300 does not advertise any routes to the upstream router 600 through the tunnel. The select routes 10 to be advertised to the upstream router 600 of the physical access network 2 by the virtual residential gateways 200 are fetched from the virtual residential gateways 200 through a REST mechanism by the residential gateway router application 300, and these select routes 10 are configured as static select routes 10 by the residential gateway router application 300 through Simple Network Management Protocol. According to an alternative embodiment, the residential gateway router application 300 fetches the select routes 10 from the virtual residential gateways 200 through any other suitable mechanism, such as RPC, etc. According to a further alternative embodiment, the residential gateway router application 300 advertises the select routes 10 through any other suitable protocol, such as RIPv2, or OSPF, or IS-IS, etc.

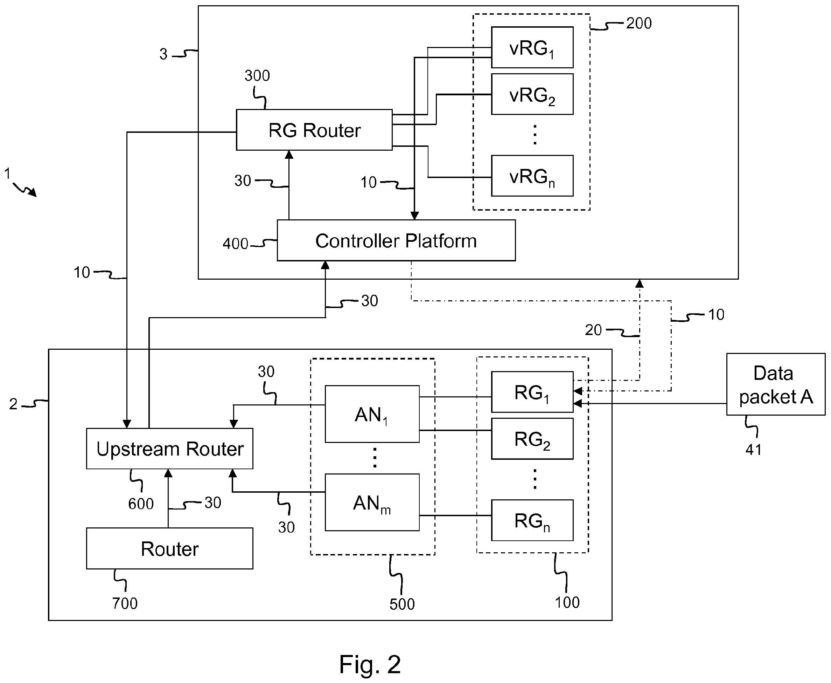

Fig. 2 shows the system 1 of Fig. 1, where a physical residential gateway 100, labelled RG₁ in Fig. 2, receives a data packet 41. The data packet 41 is labelled data packet A as visible in Fig. 2, but will further be referred to as data packet 41. Components having identical reference numbers to components in Fig. 1 perform the same function. The physical residential gateway RG₁ does not have the intelligence to handle the data packet 41. In other words, the physical residential gateway 100 does not have access to a select route 10 stored in its physical residential gateway routing table 101 along which the physical residential gateway 100 can forward the data packet 41 so that it reaches its destination address. The physical residential gateway 100 RG₁ sends a request 20 to the software defined networking controller 3 to obtain a select route 10 with which the physical residential gateway 100 will be able to route the data packet 41. As a request 20, the physical residential gateway 100 forwards the data packet 41 to the software defined networking controller 3, and in particular to the corresponding virtual residential gateway 100 vRG₁. The virtual residential gateway 100 vRG₁ analyses the data packet 41 along with the select routes 10 calculated by and received from the residential gateway router application 300. The virtual residential gateway 100 vRG₁ is then able to decide how to handle the data packet 41. The SDN controller platform application 400 requests the select routes 10 from the virtual residential gateway 100 vRG₁ upon the request 20 of the physical residential gateway 100 RG₁. The SDN controller platform application 400 thereby configures the select routes 10 in the physical residential gateway 100 RG₁ through for example OpenFlow. As an alternative embodiment, the SDN platform controller application 400 configures the select routes 10 in the physical residential gateway 100 RG₁ through OpenConfig or any other suitable communication protocol, such as REST. The physical residential gateway 100 RG₁ stores the select routes 10 in its physical residential gateway routing table 101 and forwards the data packet 41 according to the select route 10 towards its destination address. As depicted in Fig. 2, the only physical residential gateway 100 receiving a data packet 41 is RG₁. Also, RG₁ receives a single data packet 41. It is clear in the context of the present invention that more than one physical residential gateway 100 can receive one or more data packets 41.

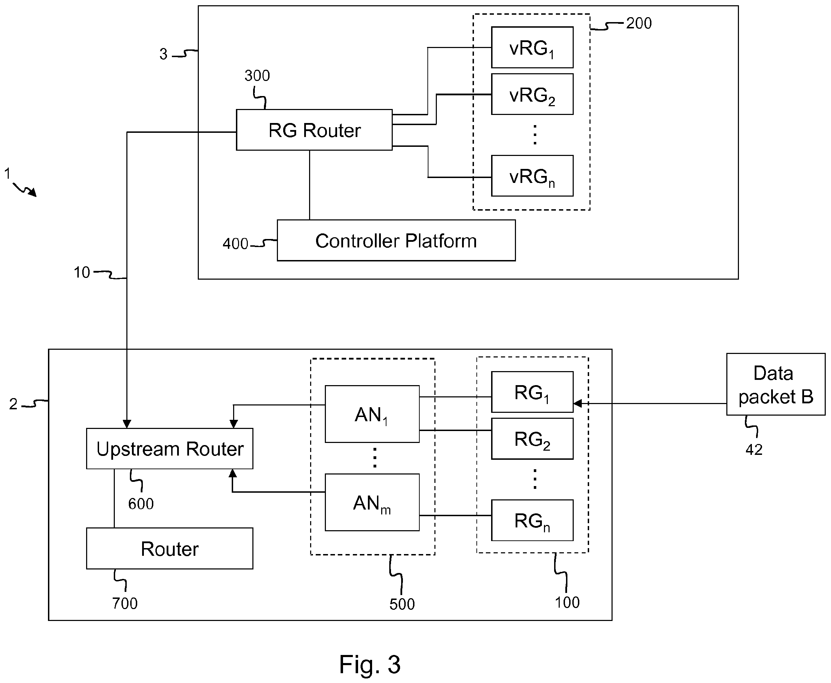

Fig. 3 shows the system 1 of Fig. 1 and Fig. 2, where a physical residential gateway 100, labelled RG₁ in Fig. 3, receives a subsequent data packet 42. The subsequent data packet 42 is labelled data packet B as visible in Fig. 3, but will further be referred to as subsequent data packet 42. The subsequent data packet 42 is a data packet subsequent to data packet 41, with an identical destination address as the destination address of the data packet 41. Components having identical reference numbers to components in Fig. 1 and Fig. 2 perform the same function. The physical residential gateway 100 has access to a select route 10 stored in its physical residential gateway routing table 101 that allows him to forward data packet 41 towards its destination address. As subsequent data packet 42 and data packet 41 have the same destination address, the physical residential gateway 100 RG₁ does not need to send a request 20 to the software defined networking controller 3 to learn how to handle a subsequent data packet 42 with the same destination address as data packet 41. The physical residential gateway RG₁ now has the intelligence to handle the subsequent data packet 42. In other words, the physical residential gateway 100 RG₁ has access to a select route 10 stored in its physical residential gateway routing table 101 along which the physical residential gateway 100 can forward the subsequent data packet 42 so that the subsequent data packet 42 reaches its destination address. As depicted in Fig. 3, the only physical residential gateway 100 receiving a subsequent data packet 42 is RG₁. Also, RG₁ receives a single subsequent data packet 42. It is clear in the context of the present invention that more than one physical residential gateway 100 can receive one or more subsequent data packets 42.

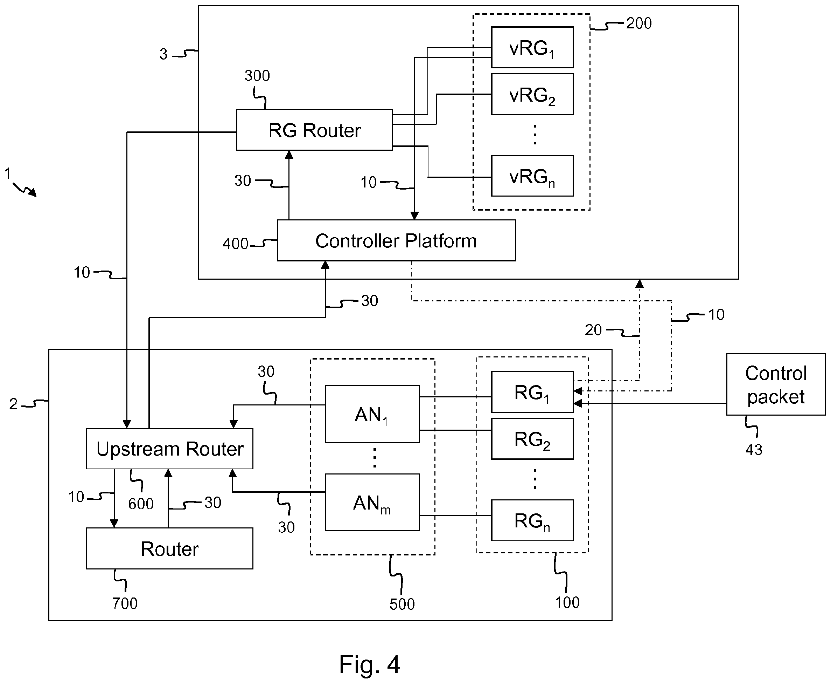

Fig. 4 shows the system 1 of Fig. 1 to 3, where a physical residential gateway 100, labelled RG₁ in Fig. 4, receives a control packet 43. Components having identical reference numbers to components in Fig. 1 to 3 perform the same function. The control plane of the system 1 is located in the virtual residential gateways 200 of the software defined networking controller 3. The physical residential gateway 100 therefore has no intelligence to handle the control packet 43. The physical residential gateway 100 RG₁ sends a request 20 to the software defined networking controller 3. As a request 20, the physical residential gateway 100 forwards the control packet 43 to the software defined networking controller 3, and in particular to the corresponding virtual residential gateway 100 vRG₁. The virtual residential gateway 100 vRG₁ processes the control packet 43 along with the select routes 10 calculated by and received from the residential gateway router application 300. The virtual residential gateway 100 vRG₁ stores the intelligence in its virtual residential gateway routing table 201 and/or responds to the control packet 43. In the case where the control packet 43 needs to be answered, the virtual residential gateway 200 vRG₁ then forwards the select routes 10 to the SDN controller platform application 400 which configures the select routes 10 in the physical residential gateway 100 RG₁ through for example OpenFlow. As an alternative embodiment, the SDN platform controller application 400 configures the select routes 10 in the physical residential gateway 100 RG₁ through OpenConfig or any other suitable communication protocol, such as Network Configuration Protocol, also referred to as NETCONF, or REST, etc. The physical residential gateway 100 RG₁ stores the select routes 10 in its physical residential gateway routing table 101. The select routes 10 are advertised by the upstream router 600 to the router 700 of the physical access network 2. As depicted in Fig. 4, the only physical residential gateway 100 receiving a control packet 43 is RG₁. Also, RG₁ receives a single control packet 43. It is clear in the context of the present invention that more than one physical residential gateway 100 can receive one or more control packets 43.

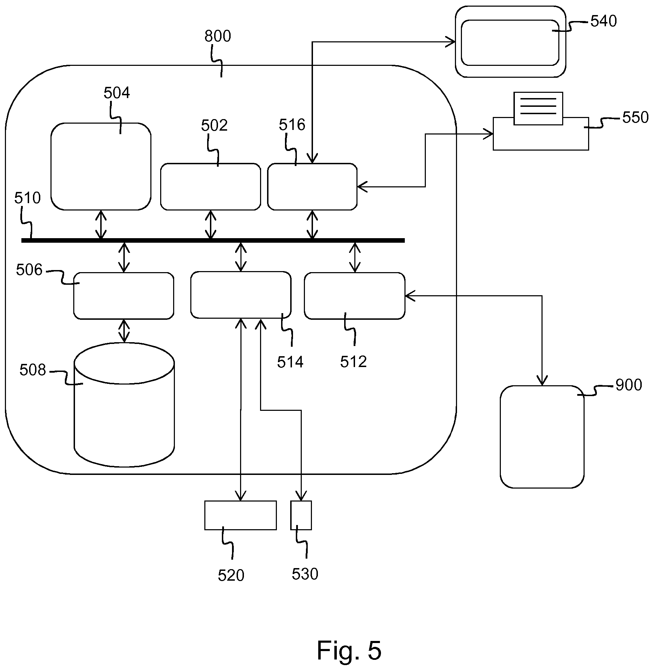

Fig. 5 shows a suitable computing system 800 for hosting the system 1 of Fig. 1 to 4. Computing system 800 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing device 800, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1 Gb Ethernet interfaces that enables computing system 800 to communicate with other devices and/or systems, for example mechanisms for communicating with one or more other computing systems 900. The communication interface 512 of computing system 800 may be connected to such another computing system by means of a local area network (LAN) or a wide area network (WAN, such as for example the internet, in which case the other computing system 580 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 800 described above can also run as a Virtual Machine above the physical hardware.

The system 1 of Fig. 1 to 4 can be implemented as programming instructions stored in local memory 504 of the computing system 800 for execution by its processor 502. Alternatively system 1 of Fig. 1 to 4 could be stored on the storage element 508 or be accessible from another computing system 900 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (1) for providing select routes (10) to a plurality of physical residential gateways (100), said system (1) comprising:
- said plurality of physical residential gateways (100), each physical residential gateway (100) adapted to receive packets (40) and further adapted to receive said select routes (10);
- a physical access network (2) comprising:
- a plurality of access nodes (500), each access node (500) configured to forward routing information (30) to an upstream router (600);
- said upstream router (600) adapted to collect said routing information (30) from said plurality of access nodes (500), and to forward said routing information (30) to a software defined networking controller (3);
- said software defined networking controller or SDN controller (3) adapted to run:
- a SDN controller platform application (400) adapted to receive a request (20) from one or more physical residential gateways (100);
- said residential gateway router application (300) adapted to receive said routing information (30), to calculate said select routes (10) from said routing information (30) and to forward said select routes (10) to a plurality of virtual residential gateway applications (200); and
- said plurality of virtual residential gateway applications (200), each virtual residential gateway application adapted to store said select routes (10) in a virtual residential gateway routing table (201), and further adapted to provide said select routes (10) to a respective physical residential gateway (100) upon said request (20) of said respective physical residential gateway (100).

2. A system (1) according to claim 1, wherein said SDN controller platform application (400) is further adapted to request said select routes (10) from said virtual residential gateways (200) upon a request (20) of said respective physical residential gateway (100) and to forward said select routes (10) to said plurality of physical residential gateways (100).

3. A system (1) according to claim 1, wherein each of said plurality of physical residential gateways (100) is further adapted to store said select routes (10) in a physical residential gateway routing table (101).

4. A system (1) according to claims 1 and 3, wherein one or more of said packets (40) is a data packet (41), comprising a destination address for which there is no select route (10) available in said physical residential gateway routing table (101) and for which said respective physical residential gateway (100) sends said request (20) to said software defined networking controller (3) requesting a select route (10) for said destination address.

5. A system (1) according to claim 1, wherein one or more of said packets (40) is a control packet (43) for which said respective residential gateway (100) sends said request (20) to said software defined networking controller (3) requesting a processing of said control packet (43).

6. A system (1) according to claim 1, wherein said upstream router (600) is adapted to collect said routing information (30) from a plurality of routers (700) from said physical access network (2).

7. A computer implemented method to run on a software defined networking controller (3), said method comprising the steps of:
- receiving routing information (30) from an upstream router (600), said upstream router (600) adapted to collect said routing information (30) from a plurality of routers (700) and/or a plurality of access nodes (500) of a physical access network (2);
- calculating select routes (10) from said routing information (30);
- forwarding said select routes (10) to a plurality of virtual residential gateways (200);
- storing said select routes (10) in a virtual residential gateway routing table (201) of each of said virtual residential gateways (200);
- receiving a request (20) from a physical residential gateway (100) of said physical access network (2);
- requesting said select routes (10) from a respective virtual residential gateway (200);
- retrieving said select routes (10) from a respective virtual residential gateway routing table (201); and
- forwarding said select routes (10) to a SDN controller platform application (400) in order to provide said select routes (10) to said physical residential gateway (100).

8. A computer implemented method according to claim 7, said method further comprising the steps of:
- configuring said select routes (10) as static select routes (10); and
- forwarding said static select routes (10) to said upstream router (600) in order to advertise said static select routes (10) to said physical access network (2).

9. A computer program comprising software code that when executed on a computer perform the method of claim 7.

10. A computer readable storage medium comprising computer-executable instructions which, when executed by a computing system, perform a method according to claim 7.

## Patentansprüche

1. System (1) zur Bereitstellung ausgewählter Strecken (10) für eine Vielzahl physischer, stationärer Gateways (100), wobei besagtes System (1) umfasst:
- besagte Vielzahl physischer, stationärer Gateways (100), wobei jedes physische, stationäre Gateway (100) ausgelegt ist für den Empfang von Paketen (40) und weiterhin ausgelegt ist für den Empfang besagter ausgewählter Strecken (10);
- ein physisches Zugangsnetzwerk (2), umfassend:
- eine Vielzahl von Zugangsknoten (500), wobei jeder Zugangsknoten (500) konfiguriert ist für das Weiterleiten von Routinginformationen (30) an einen vorgelagerten Router (600);
- wobei besagter vorgelagerter Router (600) ausgelegt ist für das Sammeln besagter Routinginformationen (30) von besagter Vielzahl von Zugangsknoten (500) und für das Weiterleiten besagter Routinginformationen (30) an eine softwaredefinierte Netzwerksteuerung (3);
- wobei besage softwaredefinierte Netzwerksteuerung oder SDN-Steuerung (3) ausgelegt ist für den Betrieb von:
- einer SDN-Steuerungsplattformanwendung (400), die ausgelegt ist für den Empfang einer Anfrage (20) von einem oder mehreren physischen, stationären Gateways (100);
- besagter Routeranwendung (300) besagten stationären Gateways, ausgelegt für den Empfang besagter Routinginformationen (30), für das Berechnen besagter ausgewählter Strecken (10) zu einer Vielzahl virtueller, stationärer Gatewayanwendungen (200); und
- besagter Vielzahl virtueller, stationärer Gatewayanwendungen (200), wobei jede virtuelle, stationäre Gatewayanwendung ausgelegt ist für das Speichern besagter ausgewählter Strecken (10) in einer Routingtabelle (201) für virtuelle, stationäre Gateways, und weiterhin dafür ausgelegt ist, um besagte ausgewählte Strecken (10) einem entsprechenden physischen, stationären Gateway (100) auf besagte Anforderung (20) des besagten, entsprechenden physischen, stationären Gateways (100) hin zur Verfügung zu stellen.

2. System (1) nach Anspruch 1, wobei besagte SDN-Steuerungsplattformanwendung (400) weiterhin dafür ausgelegt ist, um auf die Anforderung (20) des besagten, entsprechenden, physischen stationären Gateways (100) hin besagte ausgewählte Strecken (10) von besagten, virtuellen stationären Gateways (200) anzufordern und besagte ausgewählte Strecken (10) an besagte Vielzahl physischer, stationärer Gateways (100) weiterzuleiten.

3. System (1) nach Anspruch 1, wobei jedes aus der besagten Vielzahl von physischen, stationären Gateways (100) weiterhin dafür ausgelegt ist, um besagte ausgewählte Strecken (10) in einer Routingtabelle (101) für physische, stationäre Gateways zu speichern.

4. System (1) nach Anspruch 1 und 3, wobei eines oder mehrere der besagten Pakete (40) ein Datenpaket (41) ist, welches eine Bestimmungsadresse umfasst, für welche in der besagten Routingtabelle (101) für physische, stationäre Gateways keine ausgewählte Strecke (10) verfügbar ist und für welches das besagte, physische, stationäre Gateway (100) besagte Anforderung (20) an die besagte, softwaredefinierte Netzwerksteuerung (3) sendet, welche eine ausgewählte Strecke (10) für besagte Bestimmungsadresse anfordert.

5. System (1) nach Anspruch 1, wobei eines oder mehrere der besagten Pakete (40) ein Steuerungspaket (43) ist, für welches das besagte, entsprechende, stationäre Gateway (100) besagte Anforderung (20) an besagte, softwaredefinierte Netzwerksteuerung (3) sendet, eine Verarbeitung besagten Steuerungspakets (43) anfordernd.

6. System (1) nach Anspruch 1, wobei besagter vorgelagerter Router (600) dafür ausgelegt ist, um besagte Routinginformationen (30) von der Vielzahl von Routern (700) des besagten physischen Zugangsnetzwerks (2) zu sammeln.

7. Auf einem Computer implementiertes Verfahren, auszuführen auf einer softwaredefinierten Netzwerksteuerung (3), wobei besagtes Verfahren die folgenden Schritte umfasst:
- den Empfang von Routinginformationen (30) von einem vorgelagerten Router (600), wobei besagter vorgelagerter Router (600) ausgelegt ist für das Sammeln der besagten Routinginformationen (30) von einer Vielzahl von Routern (700) und/oder einer Vielzahl von Zugangsknoten (500) eines physischen Zugangsnetzwerks (2);
- das Berechnen ausgewählter Strecken (10) auf der Grundlage der besagten Routinginformationen (30);
- das Weiterleiten besagter ausgewählter Strecken (10) an eine Vielzahl virtueller stationärer Gateways (200);
- das Speichern der besagten ausgewählten Strecken (10) in einer Routingtabelle (201) für virtuelle, stationäre Gateways eines jeden der besagten, virtuellen stationären Gateways (200);
- den Empfang einer Anforderung (20) von einem physischen stationären Gateway (100) besagten physischen Zugangsnetzwerks (2);
- das Anfordern besagter ausgewählter Strecken (10) von einem entsprechenden, virtuellen stationären Gateway (200);
- das Abrufen besagter ausgewählter Strecken (10) von einer entsprechenden Routingtabelle (201) für virtuelle stationäre Gateways;
- das Weiterleiten der besagten, ausgewählten Strecken (10) an eine SDN-Steuerungsplattformanwendung (400), um die besagten ausgewählten Strecken (10) dem besagten, physischen stationären Gateway (100) zur Verfügung zu stellen.

8. Ein auf einem Computer implementiertes Verfahren nach Anspruch 7, wobei das besagte Verfahren weiterhin den folgenden Schritt umfasst:
- das Konfigurieren der besagten, ausgewählten Strecken (10) als statische ausgewählte Strecken (10); und
- das Weiterleiten der besagten, statischen, ausgewählten Strecken (10) an besagten, vorgelagerten Router (600), um die besagten ausgewählten Strecken (10) dem besagten, physischen Zugangsnetzwerk (2) bekanntzumachen.

9. Computerprogramm mit Softwarecode, der bei der Ausführung auf einem Computer das Verfahren nach Anspruch 7 ausführt.

10. Computerlesbares Speichermittel, von einem Computer ausführbare Anweisungen umfassend, die bei ihrer Ausführung durch ein Computersystem das Verfahren nach Anspruch 7 ausführen.

## Revendications

1. Système **(1)** destiné à fournir des routes de sélection (10) à une pluralité de passerelles résidentielles physiques (100), ledit système (1) comprenant :
- ladite pluralité de passerelles résidentielles physiques (100), chaque passerelle résidentielle physique (100) adaptée pour recevoir des paquets (40) et en outre adaptée pour recevoir lesdites routes de sélection (10) ;
- un réseau d'accès physique (2) comprenant :
- une pluralité de noeuds d'accès (500), chaque noeud d'accès (500) configuré pour transférer des informations de routage (30) à un routeur amont (600) ;
- ledit routeur amont (600) adapté pour collecter lesdites informations de routage (30) à partir de ladite pluralité de noeuds d'accès (500), et pour transférer lesdites informations de routage (30) à un contrôleur de mise en réseau définie par logiciel (3) ;
- ledit contrôleur de mise en réseau définie par logiciel ou contrôleur SDN (3) adapté pour exécuter:
- une application de plate-forme de contrôleur SDN (400) adaptée pour recevoir une demande (20) en provenance d'une ou plusieurs passerelles résidentielles physiques (100) ;
- ladite application de routeur de passerelle résidentielle (300) adaptée pour recevoir lesdites informations de routage (30), pour calculer lesdites routes de sélection (10) à partir desdites informations de routage (30) et pour transférer lesdites routes de sélection (10) à une pluralité d'applications de passerelle résidentielle virtuelle (200) ; et
- ladite pluralité d'applications de passerelle résidentielle virtuelle (200), chaque application de passerelle résidentielle virtuelle adaptée pour stocker lesdites routes de sélection (10) dans une table de routage de passerelle résidentielle virtuelle (201), et en outre adaptée pour fournir lesdites routes de sélection (10) à une passerelle résidentielle physique respective (100) lors de ladite demande (20) de ladite passerelle résidentielle physique respective (100).

2. Système (1) selon la revendication 1, dans lequel ladite application de plate-forme de contrôleur SDN (400) est en outre adaptée pour demander lesdites routes de sélection (10) à partir desdites passerelles résidentielles virtuelles (200) lors d'une demande (20) de ladite passerelle résidentielle physique respective (100) et pour transférer lesdites routes de sélection (10) à ladite pluralité de passerelles résidentielles physiques (100).

3. Système (1) selon la revendication 1, dans lequel chacune de ladite pluralité de passerelles résidentielles physiques (100) est en outre adaptée pour stocker lesdites routes de sélection (10) dans une table de routage de passerelle résidentielle physique (101).

4. Système (1) selon les revendications 1 et 3, dans lequel un ou plusieurs desdits paquets (40) est un paquet de données (41), comprenant une adresse de destination pour laquelle il n'y a pas de route de sélection (10) disponible dans ladite table de routage de passerelle résidentielle physique (101) et pour laquelle ladite passerelle résidentielle physique respective (100) envoie ladite demande (20) audit contrôleur de mise en réseau définie par logiciel (3) demandant une route de sélection (10) pour ladite adresse de destination.

5. Système (1) selon la revendication 1, dans lequel un ou plusieurs desdits paquets (40) est un paquet de contrôle (43) pour lequel ladite passerelle résidentielle respective (100) envoie ladite demande (20) audit contrôleur de mise en réseau définie par logiciel (3) demandant un traitement dudit paquet de contrôle (43).

6. Système (1) selon la revendication 1, dans lequel ledit routeur amont (600) est adapté pour collecter lesdites informations de routage (30) à partir d'une pluralité de routeurs (700) à partir dudit réseau d'accès physique (2).

7. Procédé mis en oeuvre par ordinateur destiné à s'exécuter sur un contrôleur de mise en réseau définie par logiciel (3), ledit procédé comprenant les étapes suivantes :
- recevoir des informations de routage (30) en provenance d'un routeur amont (600), ledit routeur amont (600) adapté pour collecter lesdites informations de routage (30) à partir d'une pluralité de routeurs (700) et/ou d'une pluralité de noeuds d'accès (500) d'un réseau d'accès physique (2) ;
- calculer des routes de sélection (10) à partir desdites informations de routage (30) ;
- transférer lesdites routes de sélection (10) à une pluralité de passerelles résidentielles virtuelles (200) ;
- stocker lesdites routes de sélection (10) dans une table de routage de passerelle résidentielle virtuelle (201) de chacune desdites passerelles résidentielles virtuelles (200) ;
- recevoir une demande (20) en provenance d'une passerelle résidentielle physique (100) dudit réseau d'accès physique (2) ;
- demander lesdites routes de sélection (10) à partir d'une passerelle résidentielle virtuelle respective (200) ;
- récupérer lesdites routes de sélection (10) à partir d'une table de routage de passerelle résidentielle virtuelle respective (201) ; et
- transférer lesdites routes de sélection (10) à une application de plate-forme de contrôleur SDN (400) afin de fournir lesdites routes de sélection (10) à ladite passerelle résidentielle physique (100).

8. Procédé mis en oeuvre par ordinateur selon la revendication 7, ledit procédé comprenant en outre les étapes suivantes :
- configurer lesdites routes de sélection (10) en tant que routes de sélection statiques (10) ; et
- transférer lesdites routes de sélection statiques (10) audit routeur amont (600) afin d'annoncer lesdites routes de sélection statiques (10) audit réseau d'accès physique (2).

9. Programme d'ordinateur comprenant un code logiciel qui, lorsqu'il est exécuté sur un ordinateur, effectue le procédé de la revendication 7.

10. Support de stockage lisible par ordinateur comprenant des instructions exécutables par ordinateur qui, lorsqu'elles sont exécutées par un système informatique, effectuent un procédé selon la revendication 7.
